# EUROPEAN PATENT SPECIFICATION

(11) **EP 2 148 142 B1**
(45) Date of publication and mention of the grant of the patent: **20.05.2015**
(21) Application number: 08160843.2
(22) Date of filing: 21.07.2008
(51) Int. Cl.: F24D 3/14

(54) **Device for holding a pipe in a groove of a temperature control system integrated in a surface and method therefor**
Vorrichtung zur Halten einer Leitung in einer Nut in einem Temperatursteuerungssystem, das in einer Oberfläche integriert ist, sowie Verfahren dafür
Dispositif de support de tuyau dans une rainure d'un système de contrôle de température intégré dans une surface et son procédé

(43) Date of publication of application: 27.01.2010
(73) Proprietor: Université de Liège, 4031 Angleur (BE); Franck, Pierre-Yves, 6700 Arlon (BE)
(72) Inventor: Franck, Pierre-Yves, 6700 Arlon (BE); Thomas, Sébastien, 6700 Arlon (BE)
(74) Representative: Lecomte, Didier

(56) References cited:
- WO-A-82/01058
- WO-A-83/01992
- DE-A1- 3 035 049
- US-A- 5 292 065
- US-A- 5 931 381

## Description

### Field of the invention

The present invention is directed to a device and a method for holding a pipe in a groove of a temperature control system and for forming a thermal connection between the surface and the pipe. More particularly the invention is directed to a device and a method for fixing a pipe of a floor heating system and for diffusing to the exterior of the surface the flow of heat circulating in the pipe.

### Background art

WO 00/37857 discloses a floating heating floor system with sound-insulating advantages. This system is characterised by a plurality of superimposed sheets of homogeneous, binder-free, highly refined wood pulp or other fibrous material having a supply and distribution system for warm water heat incorporated therein. In a preferred embodiment, the system comprises three superimposed sheets of such material where grooves are made in the top sheet for receiving the water piping. Elongate heat distribution sheets are placed in the grooves before receiving the water piping. The cross-sectional shape of these sheets comprise a central section shaped as a sharpedged U and two lateral flat sections connected to the upper branches of the U, respectively. The U shaped central section corresponds approximately to the groove and can receive the water piping for conducting and diffusing the heat thereof up to the upper surface. This arrangement does not provide an optimal heat transfer since the pipe contacts the distribution sheet punctually or linearly, i.e. only on a reduced surface of the pipe. Additionally, this arrangement does not provide any fastening means of the pipe. The mounting of the pipe in the groove on a longer distance can become awkward in the absence of fastening means, in particular when the pipe is made of relatively rigid material which is often the case.

EP 0 041 653 discloses a heat exchanger element for a floor heating system as illustrated in figure 1. A carrying sheet of metal 1 with a half-rounded recess or groove 2 for the pipe 13 is pressed. The pipe 13 can be positioned in the recess 2 and the two edges or corners 4 between the recess 2 and the two lateral plane sections are pressed together in order to "close" the recess. This achieves a close contact of the sheet 1 with a major part of the outer surface of the pipe 13. The two lateral sections can be held in position for ensuring a close contact between the pipe and the metal sheet of the exchanger by clinching a zigzag wire thereto. This arrangement provides a very good heat transfer between the pipe and the diffuser but requires a special tooling and is therefore not particularly adapted for on-site application as is usually required for floor heating systems. Additionally, this arrangement does not provide any solution for the fixation of the heat exchangers or diffusers to the floor.

Documents WO 82/01058 and US 5,292,065 disclose respectively a device for holding a pipe according to the preamble of claim 1 and a method for holding a pipe according to the preamble of claim 7. The device of document WO 82/01058 is resilient and upwards convexly pre curved in order to, in a straightened condition after assembly, exert a pressure against the overlying floor and clamp the pipes in the grooves.

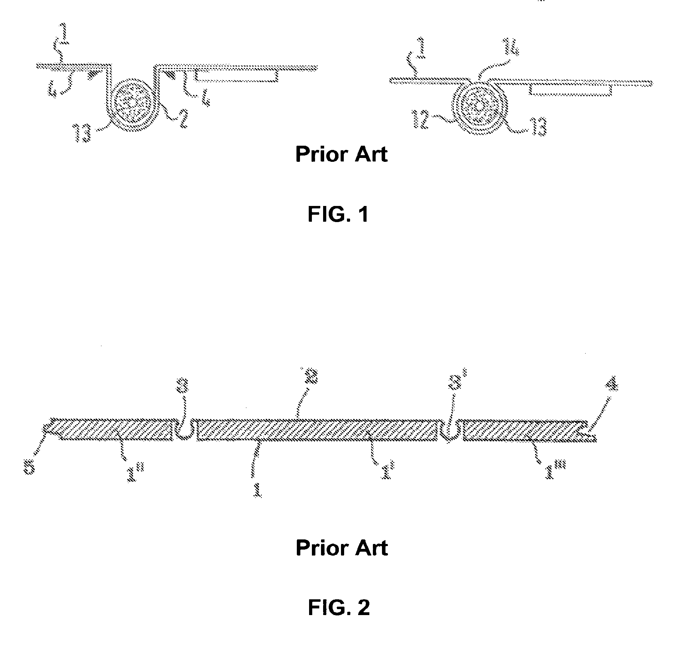

SE 468 057 discloses also a floor heating system comprising panels made of fibrous material and provided with spaced parallel grooves for placing a piping system therein, as is illustrated in figure 2. The panels 1', 1", 1"' are generally covered and held together by an aluminium sheet 2 with recesses or grooves 3, 3' extending in the regular spaces between the elements constituting the panel. The cross-section of these recesses or grooves 3, 3' is shaped like an omega. They are dimensioned so that the pipe snaps into the recess when pressed therein, thereby ensuring an optimum contact between the aluminium sheet and the pipe. This arrangement has nevertheless the drawback that it is rather expensive and not particularly easy to install in rooms with an irregular shape. Indeed, the application of this solution requires the purchase of the panels which are rather expensive and additionally, the mounting of such prefabricated panels is rather cumbersome at areas of the rooms where the pipe must describe a curve.

The European Union Directive 2002/91/EC on the Energy Performance of Buildings has for objective to promote the energy performance of buildings within the European Community taking into account outdoor climatic and local conditions as well as indoor climate requirements and cost-effectiveness. Implementation of the Directive's requirements will contribute to the EU's carbon emission reduction targets as set out in the Kyoto Protocol (8% reduction between 1990 and 2012) and the Energy Policy for Europe (20% reduction by 2020).

There is therefore a general need for an improved system for rendering the mounting of such piping for temperature control system, typically floor heating systems, easier, in particular for rooms with an irregular shape (e.g. many corners), cheaper and providing still an optimum heat transfer. This is particular true for floor heating systems where there is a need for reducing (increasing) the water temperature in order to optimise the global efficiency of the heating (cooling) system.

### Definition

The expression "omega shape" or "shape of (an) omega" refers to the general shape of an omega Ω, i.e. an opened substantially rounded central section with two aligned lateral sections, one at each end of the central section, where the opened substantially rounded central section is more than half-rounded so that its opening is narrower than the width of the rounded portion.

### Disclosure of the invention

The problem of the invention is to solve the aforementioned problems by providing a device for holding a pipe according to claim 1.

Such a device is very cheap to produce, is very easy to install in the grooves and allows a simplified and easy mounting of the pipe while providing an excellent thermal efficiency by the optimal contact with the piping. Indeed, the use of resilient material for the holding device avoids the use of a heaving tooling for bringing it in close contact with the pipe. After insertion of the device in the groove, it can expand back in the specially shaped groove to be securely fastened there in by the omega shape and still provides an optimal contact with the pipe.

The holding device is shaped so that it fulfils the following requirements:
- The holding device can be easily introduced in a groove formed by two parallel planks preferably with a trapezoid cross-section (for example with an angle of 75°) and remain positioned therein.
- The pipe can be easily inserted by snapping in the holding device.
- After insertion, the pipe remains positioned in the groove in close contact with the holding device for providing an optimal heat transfer, its upper surface aligning with the top surface of the planks.
- The holding devices are elongated items which can be superposed for facilitating the transportation, the handling and the storage.

Preferably, each of the lateral sections of the holding device is angled about a corner, respectively, with regard to the central section, and the radius of curvature of the corner is small enough to prevent any sliding movement of the lateral section when the device is loaded, preferably equal to or less than 1 mm.

This provides a very stable positioning of the device and a good fixation of the pipe, even if this latter is subject to a vertical load as the case could be if the pipe slightly protrudes from the surface due to some inaccuracies inherent of such a mounting operation.

The holding device is preferably made of a single sheet of metallic material and each of the lateral sections is made by folding an end section of the sheet.

The metallic material is preferably aluminium for its good thermal conductivity and low emissivity . The sheet has typically a gauge ranging from 0.3 to 0.5 mm, preferably about 0.5 mm. Alternative material to the usual metallic material fulfilling these requirements could also be envisaged, like for example a polymer sheet reinforced with metallic fibres.

According to the invention the angle at the corner between each of the lateral sections and the central section is less than 80°, more preferably about 75°.

Preferably, the central section is generally elongate, preferably substantially straight, and able to be bent when pushed into the groove, the lateral sections coming then into contact with the surface at each side, respectively, of the groove.

Preferably, the central section is essentially half-rounded and resilient such that the half-rounded central section can be inserted into the groove, where the upper section of the groove is slightly narrower than the width of the central section, and can expand back in the groove so that the device takes the shape of an omega.

The above mentioned measures permit a cheap manufacturing of the device. Such a device is generally elongate along a longitudinal axis and has a reduced thickness of the metallic sheet. The shapes disclosed here above allow a series of devices to be easily superposed for the transport and storage.

The invention provides also a method for holding a pipe of a temperature control system integrated in a surface according to claim 7.

Preferably, the positioning step of the at least one holding device in the groove comprises:
- positioning the at least one holding device, the central section of which being generally elongate, preferably substantially straight, and each of the lateral sections of which being angled about a corner, respectively, with regard to the central section, over the groove such that the extremity of each of the lateral sections is in contact with the surface at each side of the groove, respectively;
- exerting a force on the central portion towards the groove such that the central section is bent and inserted into the groove and the lateral sections come into contact with the surface at each border of the groove.

Preferably, the force is exerted by a finger or foot push. The fact that the required force can be exerted by a normal human being renders the mounting very easy.

Preferably, the positioning step of the at least one holding device in the groove comprises:
- positioning the at least one holding device, the central section of which being half-rounder, over the groove such that the half-rounded section slightly penetrates the groove;
- exerting a force on the central portion, preferably on the inside of the half-rounded section, towards the groove such that the central section gets narrower, penetrates and then expands back in the groove.

Preferably, the step of providing a groove in the surface comprises:
- providing and positioning on a floor a first plank with a first top face forming the surface and a first side face inclined with regard to a plane perpendicular to the first top face, the first side face and the first top face intersecting at a first edge for forming an angle of less than 90°;
- providing on the floor a second plank with a second top face forming the surface and a second side face inclined with regard to a plane perpendicular to the second top face, the second side face and the second top face intersecting at a second edge for forming an angle of less than 90°,
- positioning the second plank relative to the first plank such that the first edge and the second edge face each other and are parallel for forming the groove.

Preferably, the positioning step of the second plank relative to the first plank is made by means of an elongate spacer or at least two distant shorter spacers positioned against the first edge and against which the second plank is then positioned.

Preferably, the planks are fastened to the floor by screwing, gluing or nailing means (pneumatic or electric) means, after having been positioned.

Preferably, the holding device is dimensioned such that the holding device contacts the pipe on at least half of its periphery.

Preferably, the holding device and the groove are dimensioned depending on the size of the pipe such that the pipe positioned in the groove is distant from the base of the groove, in order to prevent the pipe from carrying any vertical load and to reduce downward heat transfers. This distance is typically in the order of the millimetre, e. g. about 1 mm.

### Brief description of the drawings

Figure 1 corresponds to two cross sectional views of a diffuser known from the prior art (EP 0 041 653).
Figure 2 corresponds to a cross sectional views of a floor heating known from the prior art (SE 468 057).
Figure 3 is a cross-sectional view of a floor heating system involving a fixation holding device according to the invention.
Figure 4 is top view of a section of metallic grid as in applied in the system of figure 3.
Figure 5 is a detailed cross-sectional view of the pipe and the holding device of the system of figure 3.
Figures 6(a), 6(b), 7(a)-7(c), 8(a) and 8(b) illustrate a first embodiment of the fixation holding device.

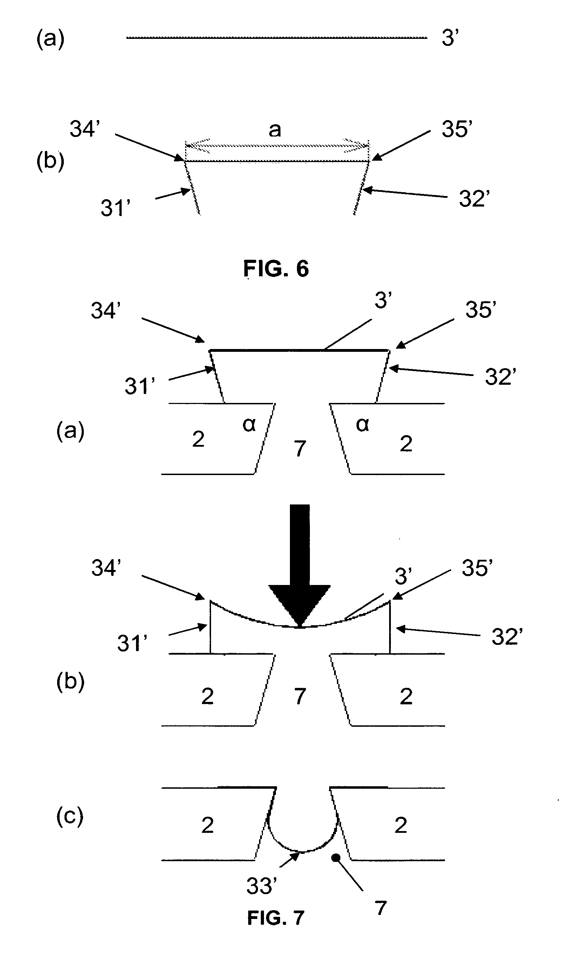

Figures 6(a) and 6(b) are cross-sectional views illustrating the steps for manufacturing the fixation holding device.
Figures 7(a)-7(c) are cross-sectional views illustrating the different steps for inserting the fixation holding device into a corresponding groove.

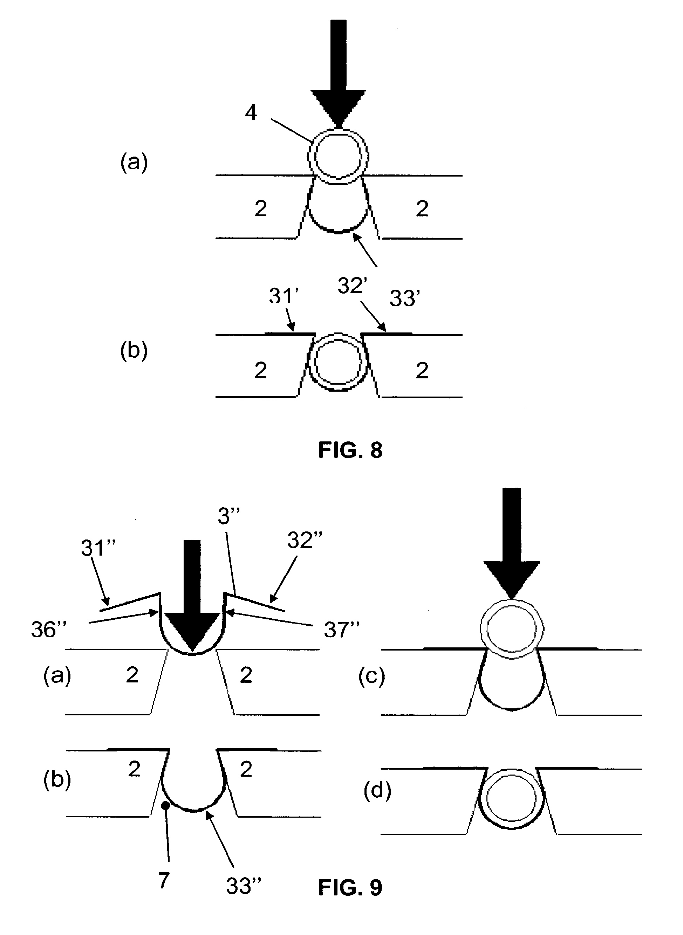

Figures 8(a) and 8(b) are cross-sectional views illustrating the steps for placing the pipe into the groove.
Figures 9(a)-9(d) illustrate a second embodiment of the fixation holding device.
Figure 9(a) is a cross-sectional view illustrating the shape of the fixation holding device and its positioning in front of the groove before insertion.
Figure 9(b) is a cross-sectional view illustrating the fixation holding device positioned in the groove and shaped like an omega.
Figure 9(c) is a cross-sectional view illustrating the positioning of the pipe in front of the groove before insertion.
Figure 9(d) is a cross-sectional view illustrating the fixation holding device positioned in the groove and shaped like an omega.

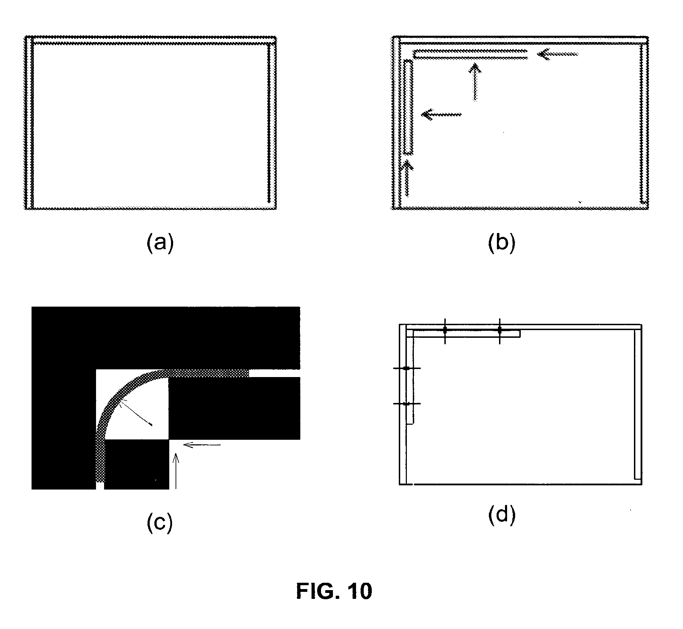

Figures 10(a)-10(d) are top views of the floor surface of a room illustrating the principle of mounting the temperature control system.

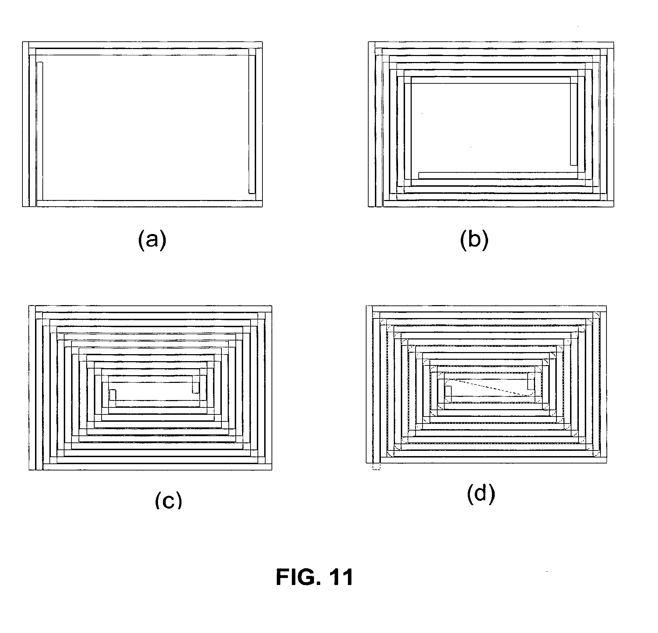

Figures 11(a)-11(d) are top views of the floor surface of a room according to figures 10(a)-10(d) illustrating the general layout of the planks and the piping of the temperature control system.

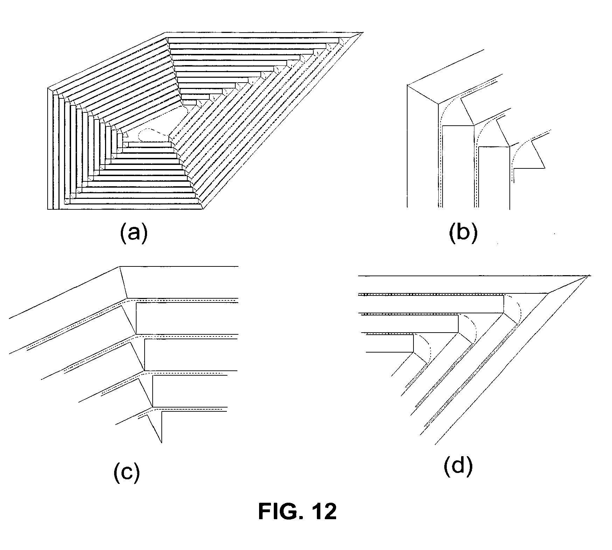

Figures 12(a)-12(d) are top views of a temperature control system placed on a surface having an irregular shape. These figures illustrate the general layout of the planks and the piping and details of the mounted system in the corners of the surface.

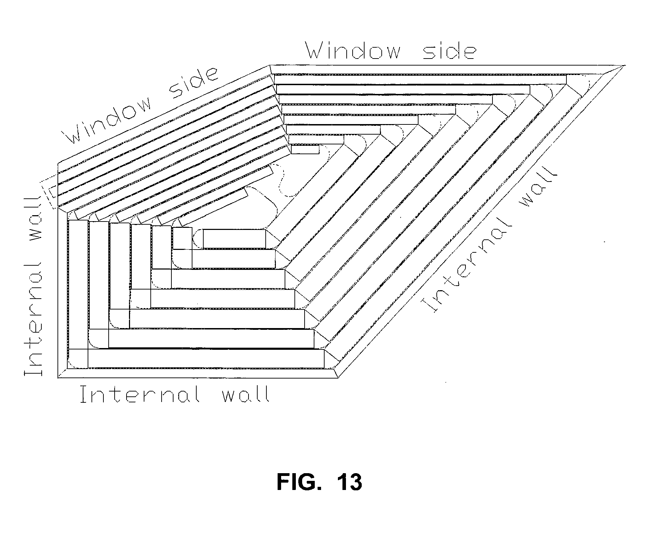

Figure 13 is a top view of a temperature control system arrangement on a surface similar to figure 12(a) where the distances between the parallel sections of the piping are different depending on the border of the surface the piping is parallel to.

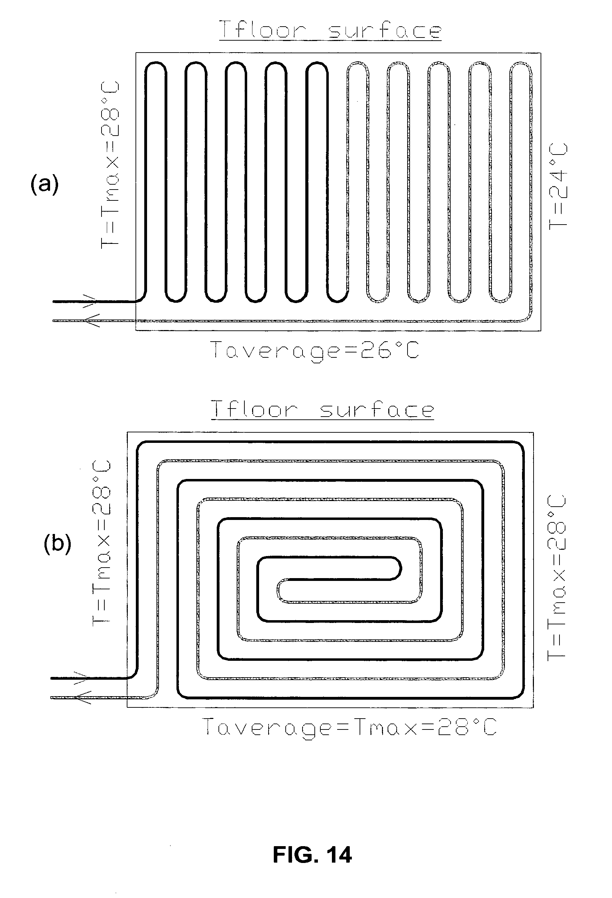

Figures 14 (a) and 14 (b) show the difference in temperature distribution between a serpentine (zigzag) and a double spiral configuration of the piping.

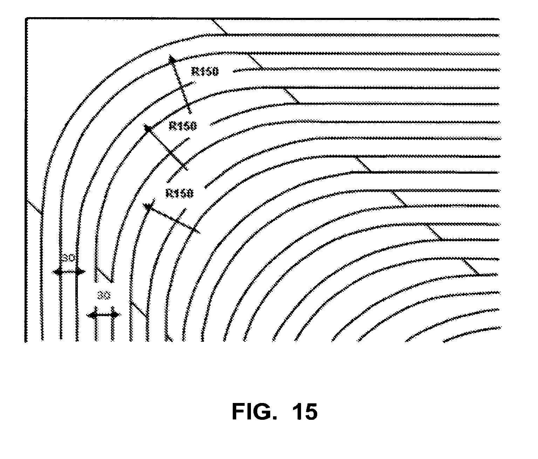

Figure 15 is a section of a plan view of the piping of a temperature control system where the possibility of having different radii of curvature is illustrated.

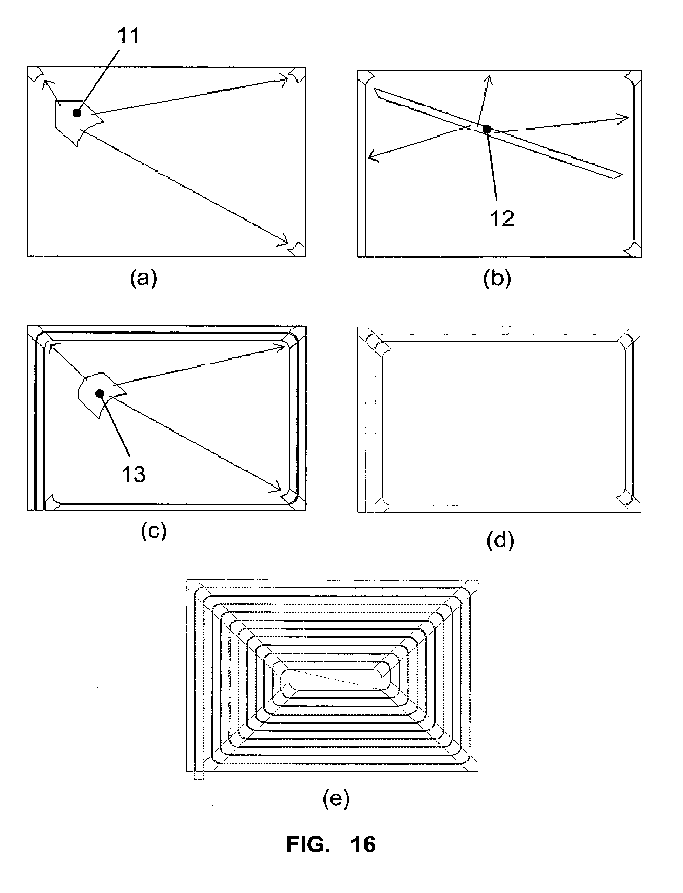

Figures 16 (a)-16(e) illustrate the principle of mounting the temperature control system similarly to figures 10(a)-10(d) but with the use of prefabricated elements.

### Detailed description of embodiments

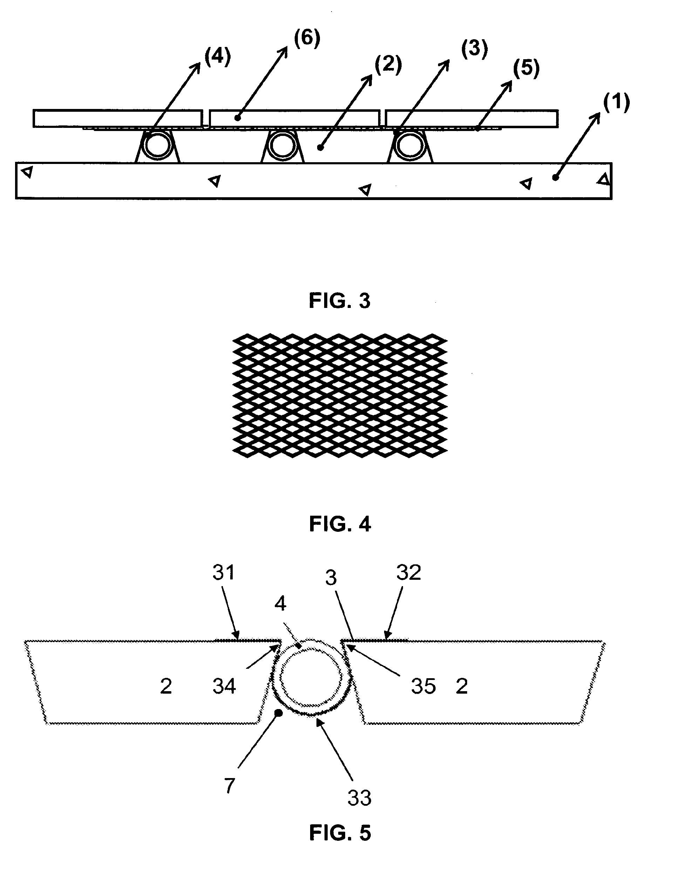

The floor heating system covered with tiles illustrated in figure 3 is mounted on a thermally insulated screed or floor 1. This latter can comprise a layer of thermally insulated mortar on a mechanically stable slab or it can also comprise one or more wood or fibrous layers assembled on the slab. Other usual or known alternatives for obtaining a thermally insulated floor are also encompassed in this disclosure. A series of elongated planks 2 are fastened to the screed 1. Each plank 2 is elongate along a longitudinal axis and has two opposite faces parallel to the longitudinal axis parallel to each other and chamfered or, differently said, inclined so as to form an angle less than 90° with the top surface. The parallel planks used have the same width. The thickness of these planks must be approximately constant and be at least the diameter of the pipe or conduit 4 to be between the planks, preferably slightly more than the diameter as is illustrated in figure 3. The planks are positioned successively parallel to each other and distant, respectively, of about the diameter of the pipe. This arrangement forms a series of grooves having a trapezoid cross-section, the width of the groove tapering to the top surface of the planks. Alternative shapes, like a cylindrical shape, could be considered for the groove as long as it tapers to the top surface. The depth of the groove equals the thickness of the planks. A fixation holding device 3 made of conductive and low emissivity material, like aluminium, is used for holding and fixing the pipe in the groove. It serves also for diffusing the heat transported by the pipe 4. The holding device 3 has a general omega shape when placed in the groove. This omega shape defined by the groove with its trapezoidal cross-section and has for effect that the pipe is trapped in the groove and in close contact with the holding device. The lateral sections or wings of the holding device are in contact with the top surfaces of the planks and diffuse the heat upwardly and horizontally in an optimized manner. A grid-shaped metallic sheet 5 is positioned on top of the planks in contact with the upper section of the pipe diameter and the lateral sections or wings of the holding devices 3. Optionally, the grid-shaped metallic sheet is fastened to the floor, preferably by means of staples or nails. Cement glue (not represented) is used for mounting the tiles 6 on the metallic sheet 5. The meshes of the grid-shaped metallic sheet are filled with the glue so that the glue can contact the top surfaces of the planks directly, thereby enabling a correct anchoring of the tiles to the floor. The tiles 6 are in direct contact with some sections of the metallic sheet or at least very close thereto and the metallic sheet is drown in the glue layer thereby forming a thermal bridge from the diffuser and the pipes directly to the lower surface of the tiles 6.

Figure 4 illustrates a section of a typical grid-shaped metallic sheet that can be used in the arrangement of figure 3. This is a spread out metallic sheet as is available on the market for different purposes. Any different type of metallic sheet can be used as long as it is grid-shaped, i.e. with meshes or holes or apertures, allowing the cement glue to come into contact with the top surface of the planks.

The details of the mounting of the pipe in the groove by means of the holding device are illustrated in figure 5. The holding device 3 comprises, when inserted in the groove, a half-rounded central section 33 and two lateral sections 31 and 32, one at each side of the central section 33. The lateral section 31 and 32 are relatively flat and form an angle with the central section at the corner 34 and 35, respectively. At least the central section of the holding device must be resilient enough to be able to be deformed when inserted in the groove and to expand back in the trapezoidal cross-section of the groove, against the side faces of the planks forming the groove, in order to take an omega shape.

When placed in the groove, the holding device conforms to the planks, i.e. the flat lateral sections are in contact with the top surfaces of the planks, the corners 34 and 35 mate with the corresponding edges of the planks at the intersection of the top surfaces and lateral surfaces of the planks, respectively, and the substantially flat portions of central section starting from the corners 34 and 35, respectively, are in contact with the corresponding side surfaces of the planks. The radius of curvature of the corners 34 an 35 are small enough, i.e. about 1mm or less, so that they properly mate with the corresponding edges of the planks and also so that they avoid any sliding movement of the lateral sections 31 and 32 along the top surfaces of the planks when the holding device is loaded, for example when an unusual force is applied downwardly to the pipe. The half-rounded portion of the central section is distant from the bottom of the groove in order to create an air gap and achieve an optimal thermal insulation with the screed or floor on which the system is mounted. The low emissivity characteristic of the material of the holding device reduces also the heat radiation downwardly toward the screed or floor on which the system is mounted. The width of the groove at the top surface level of the planks is about the outer diameter of the pipe 4, so that the thickness of the sheet of the holding device 3 at the corners 34 and 35 reduce the opening of the groove to a width that is slightly less than the outer diameter of the pipe. The width of the groove can be determined differently depending on the thickness of the sheet of the holding device and the shape and angle of the corners 34 and 35 and the stiffness of the material of the planks. The corners of the holding device could indeed not fully mate with the corresponding edges of the planks and thereby define the reduced entrance width of the groove. Alternatively, the thickness of the sheet could be increased and a relatively flexible material could be selected for the planks or vice-versa. Important is to achieve thanks to the omega shaped holding device a reduced entrance width of the groove so that the pipe needs then to be pushed into the groove for snapping there into. The pipe is in close contact with the holding device along a major part of its periphery. About one fourth of the pipe periphery is not in direct contact with the holding device but this periphery portion is at the top of the pipe and will be in contact, at least partially, with the grid-shaped metallic sheet 5 and with the glue in the case of tile flooring.

It shall be mentioned that alternative floorings are possible with the above mentioned concept. Indeed, parquet flooring can also be glued similarly to the tile flooring, with or without the meshed metallic sheet depending, e. g. on the admissible thickness of the glue layer. Parquet flooring can also be placed directly on the diffuser either by means of nails or simply floating.

The holding device 3 is generally an elongate member with a longitudinal axis parallel or corresponding to the axis of the piping when this latter is placed in the groove by means of the holding device. The holding device is preferably symmetrical about its longitudinal axis. In a preferred embodiment, the holding device is made of a single strip of metallic material, preferably steel or aluminium, i.e. a good, light, easy to handle and cheap heat conductor. The metallic sheet of the holding device has typically a gauge ranging from 0.3 to 0.5 mm, with a preferably gauge of about 0.5 mm. The strip of metallic material can be grid-shaped with meshes or with a series of holes or apertures. In that case, it can be renounced to place the spread out metallic sheet 5 as in figure 3, when the lateral sections 31 and 32 cover a major portion of the top surfaces of planks 2. In that situation, the cement glue for the tiles would be able to flow through the meshes, holes or apertures and contact directly the planks for a satisfactory fixation of the thereby glued flooring.

A first preferred embodiment of the fixation holding device is illustrated in figures 6(a), 6(b), 7(a)-7(d) and 8(a) and 8(b). Figure 6(a) shows a cross-sectional view a strip of resilient metallic material for manufacturing the holding device as illustrated in figure 6(b). The strip 3' is bent at its two ends along an axis parallel to the longitudinal axis of the strip (perpendicular to the plane of the view), respectively, in order to achieve the shape of figure 6(b). This shape comprises a central section 33' and two lateral sections or wings 31' and 32'. The lateral sections are generally planar whereas the central section can be substantially straight or slightly curved. The lateral sections are bent about the corners 34' and 35' to form an angle with the central section which is about 90° or less. In figure 6(b), the angle is less than 90°, i.e. about 80°. The holding device 3' as illustrated in figure 6(b) is ready to be applied and inserted into a groove.

This action is illustrated in figures 7(a)-7(c). The holding device 3' is positioned symmetrically about the groove between the planks 2 so that the extremity of each lateral section 31' and 32', respectively, is in contact with the top surface of the planks, at each side of the groove, respectively, as illustrated in figure 7(a). The angle α of the planks is typically about 75°. An effort is exerted on the central section 33' downwardly in front of the groove. It results that the central section bends towards the groove as is illustrated in figure 7(b) and is inserted therein as is illustrated in figure 7(c). The central section needs to be resilient and flexible enough to allow it to be inserted into the groove without kinking the metallic sheet and without requiring a too high effort. The effort is typically exerted by a finger or foot pressure but could also be exerted by means of a tool. Upon insertion, the holding device is designed in connection with the size of the groove such that the central section of the holding device expands in the groove, the corners 31' and 32' come into contact with the corresponding edges of the planks, respectively, and the lateral sections are in contact with the corresponding portions of the top surfaces of the planks, respectively. The slight expansion process of the central section in the groove permits the holding device to take the shape of an omega and to nicely mate with the planks.

Figure 8(a) shows the positioning step of the pipe in front of the opening of the groove. As can be seen on the figure, the outer diameter of the pipe is slightly higher than the opening of the groove at the top surface level of the planks. The geometrical clamping ratio, i.e. the ratio of the difference the outer diameter of the pipe and the width of the opening with the width of the opening, is about a few percents, typically 4-7%, more particularly about 6%, and depends mainly on the rigidity of the pipe, the size of the pipe and the material of the planks and the angle α between the lateral face and the top face of the planks. Upon exerting the effort according to the arrow in figure 8(a), the pipe penetrates and snaps into the groove. The pipes is thereby clamped in the groove, positioned in a stable fashion, kept distant from the upper surface of the screed or floor on which the system is mounted and has a major part of its periphery in close contact with the metallic sheet of the holding device serving as diffuser. The diameter of the piping typically ranges from 12 to 25 mm in accordance with the pipes available on the market. The piping is typically made of material with heat exchange capacities, like some plastics, e.g. polybutylene, or copper or any other usual material. In the case of a pipe with a diameter of 16 mm, a metallic sheet of the holding device with a gauge of 0.5 mm and planks with a thickness of 18 mm, the distance between the bottom of the groove and the lowest point of the holding device is of about 1 mm (the pipe aligning with the top surface of the planks).

A second preferred embodiment of the fixation holding device is illustrated in figures 9(a)-9(d). A preformed fixation holding device 3" is used and positioned in front of the groove between the planks as illustrated in figure 9(a). The angle between the side face and the top face of the planks is typically 75°. It comprises a substantially half-rounded central section 33" serving as a cradle for the pipe, two straight sections 36", 37" and two lateral flat sections or wings 31 ", 32", one of each at each end, respectively. The angle between each straight section 36"/37" and the corresponding lateral section 31 "/32" is less than 90°, preferably about 75°. This angle could however be also about 90°. The rounded portion of the central section is positioned in the opening of the groove. The central section 33" of the holding device 3" is wider than the opening of the groove so that a vertical downward effort is necessary to force it into the groove (see arrow in figure 9(a)). Upon exertion of this effort, the half-rounded central section gets deformed and narrowed in order to be able to penetrate the groove. Upon insertion, the central section 33" expands back in the widening section of the groove and takes the shape of an omega. It is thereby in place similarly to the previous embodiment, more particularly as illustrated in figure 7(c). The flat lateral section 31" and 32" are in close contact with the top surfaces of the planks, the corners 34" and 35" mate with the corresponding edges of the planks, the straight portions of the central section are in contact with the lateral faces of the planks, respectively.

The procedure for the insertion of the pipe 4 into the groove is similar as for the previous embodiment, namely that the pipe is positioned in front of the opening and a vertical downward effort is exerted on the pipe to make it pass through the narrowed opening and snap into the central section of the holding device in the groove. The pipe is then similarly held, positioned, fixed in the groove and at major part of its periphery is in close contact with the metallic sheet of the holding device for diffusing its heat to the upper surface. The central section of the holding device requires it to be resilient enough to take the shape of an omega after insertion into the groove. The initial shape of the holding device can depart from the shape illustrated in figure 9(a). Indeed, the central section can be less than half-rounded so that the lateral section would not be in the same plane but rather be in planes which intersect above the central section.

In both embodiments and also more generally, any lubricant like water with soap can be spread along the groove for facilitating the insertion of the holding device or holding device into groove. The same applies for the insertion of the pipe in the holding device. The use of water as basis is convenient for it is cheap and evaporates rapidly. It does not hinder an optimal thermal conductivity between the different elements.

More generally speaking, the shape of the holding device has to be so that it fulfils the following requirements:
- The holding device can be easily introduced in a groove formed by two parallel planks preferably with a trapezoid cross-section (for example with an angle of 75°) and remain positioned therein.
- The pipe can be easily inserted by snapping in the holding device.
- After insertion, the pipe remains positioned in the groove in close contact with the holding device for providing an optimal heat transfer, its upper surface aligning with the top surface of the planks.
- The holding devices are elongated items which can be superposed for facilitating the transportation, the handling and the storage.

The pipe is arranged according to a layout as illustrated in figures 10(a)-10(d) and 11(a)-11(d). A double corridor is formed by the spaces left between the planks and the pipe is introduced into this double corridor. A first series of planks is fixed along the sides of the room as is illustrated in figure 10(a). A second series of planks is then loosely placed parallel to the first series of planks and at a reduced distance as is illustrated in figure 10(b). At a corner, the two planks forming the corner will be moved to the corner by sliding parallel or against the corresponding previous plank until both planks contact each other. This step is for accommodating a free space at the corner for the pipe. This is illustrated in figure 10(c) whereas this figure shows a section of pipe in the corner for illustrative purposes only. The loosely positioned planks are then spaced from the corresponding previous planks by means of a spacer for forming the groove receiving the pipe as is illustrated in figure 10(d). The planks are then fixed to the floor. The same procedure is followed for the successive planks thereby forming a double spiral with the grooves, i.e. from the periphery to the centre until no more room is available at the centre. Figure 11(a) illustrates at the left side the double corridor or the two parallel grooves, one for the inlet and the other for the outlet. Figure 11(b) illustrates the double spiral starting from the lower left corner. Figure 11 (c) illustrates the situation where not enough space is left for continuing the described procedure. Figure 11(d) illustrates the finished layout where the pipe has been inserted in the double spiral. The grooves are first filled with the holding devices and the thereby formed grooves are filled by the pipe starting at the perimeter (lower left corner in figure 11(d)) from the start of the spiral until the centre and then back to the start of the spiral at the perimeter in order to form one loop with an inlet and an outlet as is illustrated in figure 11(d). The spaces left in the corners and in the middle can be filled with material, either cut to size or in a granular form.

This procedure is valid irrespective of the geometry of the room. Indeed, figures 12(a)-12(d) illustrate this matter of fact. Figure 12(a) illustrates the final layout in a room with a very complex shape whereas figures 12(b)-12(d) illustrate details of the corner regions of the layout of figure 12(a).

It is possible to imbricate 2 or more pipe loops in each other in a spiral configuration - In this case, the length of each circuit can be divided by 2 or more. Not only will this allow reducing circulating pump consumption, but also, because the water cycling time will be reduced, its average temperature will be higher or lower (if this is a cooling system) for a given input temperature, thus improving global heating or cooling (if this is a cooling system) system efficiency. The length of the circuits being equal (within half a meter) it insures good balancing. It must be emphasized that inlet and outlet points can be chosen on any spot along the perimeter and that they are always close together to facilitate the connections with the fluid supply system.

The distance between the pipes (stride) can be changed even within the same spiral circuit in order to adapt the power to the local heat losses. In the example of figure 13 , twice as much pipe density is foreseen along the windows, compared to other walls.

A double spiral configuration that is adopted in such a system has significant advantages as opposed to the serpentine (zigzag) configuration. Figure 14 (a) shows a serpentine layout (zigzag) whereas figure 14(b) shows a comparable spiral layout. Comparative measures for given conditions have shown a temperature loss of 4°C between the left side and the right side in figure 14(a) for the zigzag layout, resulting in an average temperature of 26°C for the serpentine configuration as the maximum legal floor temperature is limited whereas the spiral layout achieves a nearly constant temperature of 28°C at least on the inlet portion of the looped piping, i.e. from the lower left side until the centre. For cooling applications, the minimum surface temperature is also limited to avoid condensation. Everything else being equal, the advantages of the spiral layout are that:
- there are 30 % less bends (and no 180°) which facilitates the installation and reduces pressure losses in the pipe; and
- the maximum authorized power can be 30% higher.

When using a spiral circuit imbricated or not in another spiral circuit,and as illustrated in figure 15 , the radius of curvature of the pipes (150 mm for example) can be large compared to the distance between the pipes (30 mm for example) allowing a high output power, even in the corners. This is another advantage compared to a serpentine (zig-zag) layout and no complicated pipe configurations are necessary.

Endly a heating system installation can also be foreseen with prefabricated elements as illustrated in figures 16 (a)-16(e).

Prefabricated angle pieces 11 are fixed on the isolated screed or floor on three corners of the room as illustrated in figure 16(a).

Between the angle pieces, prefabricated planks 12 are cut to size and fixed along the room perimeter as illustrate in figure 16(b).

Prefabricated internal angle pieces 13 and planks are fixed along the perimeter, respecting the necessary space that will accommodate the holding device and the pipe, as illustrated in figure 16(c).

Internal angle pieces and planks are fixed in the same manner creating the corridor towards the room centre until there is no more room to put any more angle piece as illustrated in figures 16(d) and 16(e).

The pipe holding device and the pipe are then laid down in the so created double spiral groove as is shown in figure 16(e).

There is therefore also provided a method for placing a temperature control system in a surface like a floor heating system comprising the following steps:
a) providing a layer of heat insulating material on the surface where the layer comprises at least one groove for receiving a piping;
b) placing at least one heat diffuser in the at least one groove;
c) placing the piping in the at least one groove;
wherein step a) comprises placing on the surface a series of elongate planks in a row starting along the perimeter of the surface and running like a spiral on the surface until a substantially central area of the surface, where the adjacent planks are arranged in parallel and spaced by a predetermined distance in order to form at least one groove shaped as a spiral.

Preferably, the planks are placed such as to form a double spirally-shaped groove.

Preferably, step a) further comprises:
i. placing a first row of elongate planks along the perimeter of the surface;
ii. placing a second and subsequent rows of elongate planks parallel to the previous row and spaced there from at the predetermined distance in order to form with the spaces between the planks the at least one groove shaped as a spiral.

Preferably, step i further comprises leaving free of plank at least a section of the perimeter adjacent a corner of the surface for arranging an inlet and an outlet of the piping and step ii further comprises leaving some space free for the piping at the junctions of the planks at the corners of the surface, optionally by abutting the corner of a plank with the corresponding corner of the adjacent plank, the two plank generally forming an angle at a corner of the surface.

The second and subsequent rows of step ii can be double rows in order to achieve a double spirally-shaped groove.

The method can comprise the further step:
d) placing a grid-shaped metallic sheet, preferably a spread out metallic sheet, covering the piping and the at least one diffuser;
e) applying tiles by means of a glue, preferably a cement glue, between the tiles and the planks, the glue penetrating the meshes or opening of the metallic sheet and contacting the planks.

The presence of the metallic sheet provides an optimal thermal contact between the diffusers (and also the piping) and the lower surface of the tiles. The presence of the metallic sheet embedded in the glue has the additional advantage of reinforcing the glue layer and thereby provides improved mechanical characteristics of the flooring.

The holding device or holding device and the corresponding method can be applied to the method described just here above.

## Claims

1. A device (3; 3'; 3") for holding a pipe (4) in a corresponding groove (7) of a temperature control system integrated in a surface, and for forming a thermal connection between the surface and the pipe (4), the device comprising a sheet of metallic material with a longitudinal axis, the cross-section of the device comprising a central section (33; 33'; 33") for receiving the pipe (4) and a lateral section (31, 32; 31', 32'; 31",32") at each one of two opposite sides of the central section (33; 33'; 33"), the lateral sections (31, 32; 31', 32'; 31 ", 32") being designed for coming into contact with the surface at each side of the groove (7), respectively, when holding the pipe, each of the lateral sections (31, 32; 31', 32'; 31", 32") being flat and angled about a corner (34, 35; 34', 35'; 34", 35"), respectively, with regard to the central section (33; 33'; 33"), and wherein
the central section (33; 33'; 33") is resilient such that it can be inserted by deformation in the groove (7) having a cross-section tapering towards the surface, and expand back in the groove (7) so that the device takes the shape of an omega; **characterised in that**
the angle at the corner (34, 35; 34', 35'; 34", 35") between each of the lateral sections (31, 32; 31', 32'; 31 ", 32") and the central section (33; 33'; 33"), before insertion of the device in the groove, is equal to or less than 80°.

2. A device according to claim 1, wherein the radius of curvature of the corner is small enough to prevent any sliding movement of the lateral sections when the holding device is loaded, preferably equal or less than 1 mm.

3. A device according to claim 2, wherein the sheet of metallic material consists of a single strip of the metallic material and each of the lateral sections (31, 32; 31', 32'; 31 ", 32") is made by folding an end section of the strip.

4. A device according to one of claims 2 or 3, wherein the angle at the corner (34, 35; 34', 35'; 34", 35") between each of the lateral sections (31, 32; 31', 32'; 31 ", 32") and the central section (33; 33'; 33") is less than about 75°.

5. A device according to one of claims 1-4, wherein the central section (33; 33') is generally elongate, preferably substantially straight, and able to be bent when pushed into the groove (7), the lateral sections (31, 32; 31', 32') coming then into contact with the surface at each side, respectively, of the groove (7).

6. A device according to one of claims 1-4, wherein the central section (33; 33") is essentially half-rounded and resilient such that the half-rounded central section can be inserted into the groove (7), where the upper section of the groove (7) is slightly narrower than the width of the central section, and can expand back in the groove (7) so that the device takes the shape of an omega.

7. A method for holding a pipe (4) of a temperature control system integrated in a surface, and for forming a thermal connection between the surface and the pipe, the method comprising the following steps:
- providing a groove (7) in the surface;
- positioning at least one holding device (3; 3'; 3") with a longitudinal axis in the groove (7), the cross-section of the holding device comprising a central section (33; 33'; 33") for receiving the pipe (4) in the groove (7) and a lateral section (31, 32; 31', 32'; 31", 32") at each one of two opposite sides of the central section, each of the lateral sections (31, 32; 31', 32'; 31 ", 32") being flat and angled about a corner (34, 35; 34', 35'; 34", 35"), respectively, with regard to the central section (33; 33'; 33"), the lateral sections coming into contact with the surface at each side of the groove (7), respectively, when the holding device is positioned in the groove; whereas the groove (7) has a cross-section tapering towards the surface, preferably a trapezoidal cross-section; and the width of the groove at the surface level is dimensioned so that the width of the opening of the holding device (3; 3'; 3") at the surface level is slightly less than the outside diameter of the pipe (4) such that the positioning step of the pipe requires to exert a pressure on the pipe (4) towards the groove (7) so that the pipe (4) snaps into the at least one holding device (3; 3'; 3"),
- positioning the pipe (4) in the at least one holding device (3; 3'; 3");
**characterised in that**
the at least one holding device (3; 3'; 3") is resilient and dimensioned such that it is inserted in the groove (7) by deformation and expands back in the groove (7) after insertion to take the shape of an omega;
the angle at the corner (34, 35; 34', 35'; 34", 35") between each of the lateral sections (31, 32; 31', 32'; 31 ", 32") and the central section (33; 33'; 33"), before insertion of the device in the groove, is equal to or less than 80°; and

8. A method according to claim 7, wherein the positioning step of the at least one holding device in the groove comprises:
- positioning the at least one holding device (3'), the central section of which being generally elongate, preferably substantially straight, and each of the lateral sections of which being angled about a corner, respectively, with regard to the central section, over the groove such that the extremity of each of the lateral sections is in contact with the surface at each side of the groove, respectively;
- exerting a force on the central portion towards the groove such that the central section is bent and inserted into the groove and the lateral sections come into contact with the surface at each border of the groove.

9. A method according to claim 8, wherein the force is exerted by a finger or foot push.

10. A method according to claim 7, wherein the positioning step of the at least one holding device in the groove comprises:
- positioning the at least one holding device, the central section (33; 33") of which being half-rounded, over the groove (7) such that the half-rounded section slightly penetrates the groove;
- exerting a force on the central portion (33; 33"), preferably on the inside of the half-rounded section, towards the groove (7) such that the central section gets narrower, penetrates and then expands back in the groove.

11. A method according to claim 7, wherein the step of providing a groove (7) in the surface comprises:
- providing and positioning on a floor a first plank (2) with a first top face forming the surface and a first side face inclined with regard to a plane perpendicular to the first top face, the first side face and the first top face intersecting at a first edge for forming an angle of less than 90°;
- providing on the floor a second plank (2) with a second top face forming the surface and a second side face inclined with regard to a plane perpendicular to the second top face, the second side face and the second top face intersecting at a second edge for forming an angle of less than 90°,
- positioning the second plank relative to the first plank such that the first edge and the second edge face each other and are parallel for forming the groove (7).

12. A method according to claim 11, wherein the positioning step of the second plank (2) relative to the first plank (2) is made by means of an elongate spacer or at least two distant spacers positioned against the first edge and against which the second plank is then positioned.

13. A method according to claim 11 or 12, wherein the planks (2) are fastened to the floor, preferably by screwing, gluing or nailing means, after having been positioned.

14. A method according to one of claims 7-13, wherein the holding device (3; 3'; 3") is dimensioned such that the holding device contacts the pipe (4) on at least half of its periphery.

15. A method according to one of claims 7-14, wherein the holding device (3; 3'; 3") and the groove (7) are dimensioned depending on the size of the pipe (4) such that the pipe positioned in groove is distant from the base of the groove.

## Patentansprüche

1. Vorrichtung (3; 3'; 3") zum Halten einer Leitung (4) in einer entsprechenden Nut (7) eines in eine Oberfläche integrierten Temperatursteuerungssystems und zur Bildung einer thermischen Verbindung zwischen der Oberfläche und der Leitung (4), wobei die Vorrichtung eine Platte aus metallischem Werkstoff, die eine Längsachse aufweist, umfasst, wobei der Querschnitt der Vorrichtung einen zentralen Abschnitt (33; 33'; 33") zur Aufnahme der Leitung (4) und an jeder der zwei gegenüberliegenden Seiten des zentralen Abschnitts (33; 33'; 33") einen seitlichen Abschnitt (31, 32; 31 32'; 31", 32") umfasst, wobei die seitlichen Abschnitte (31,32; 31', 32'; 31", 32") jeweils zum Inkontaktkommen mit der Oberfläche an beiden Seiten der Nut (7) eingerichtet sind, wenn die Leitung gehalten wird, wobei jeder der seitlichen Abschnitte (31, 32; 31', 32'; 31", 32") in Bezug auf den zentralen Abschnitt (33; 33'; 33") jeweils flach und um eine Ecke (34, 35; 34', 35'; 34", 35") angewinkelt ist, und wobei
der zentrale Abschnitt (33; 33'; 33") elastisch ist, sodass er durch Verformung in die Nut (7), die einen sich zur Oberfläche hin verjüngenden Querschnitt aufweist, eingefügt werden kann und sich in der Nut (7) wieder ausdehnt, sodass die Vorrichtung die Form eines Omega annimmt;
**dadurch gekennzeichnet, dass**
der Winkel an der Ecke (34, 35; 34', 35'; 34", 35") zwischen jedem der seitlichen Abschnitte (31, 32; 31', 32'; 31", 32") und dem zentralen Abschnitt (33; 33'; 33"), vor dem Einfügen der Vorrichtung in die Nut, gleich oder kleiner 80° ist.

2. Vorrichtung nach Anspruch 1, wobei der Krümmungsradius der Ecke klein genug ist, um jegliche Gleitbewegung der seitlichen Abschnitte zu verhindern, wenn die Haltevorrichtung belastet ist, bevorzugt gleich oder kleiner 1 mm.

3. Vorrichtung nach Anspruch 2, wobei die Platte aus metallischem Werkstoff aus einem einzigen Streifen des metallischen Werkstoffs besteht und jeder der seitlichen Abschnitte (31, 32; 31', 32'; 31", 32") durch Falten eines Endabschnitts des Streifens gebildet ist.

4. Vorrichtung nach einem der Ansprüche 2 oder 3, wobei der Winkel an der Ecke (34, 35; 34', 35'; 34", 35") zwischen jedem der seitlichen Abschnitte (31, 32; 31', 32'; 31", 32") und dem zentralen Abschnitt (33; 33'; 33") weniger als ungefähr 75° beträgt.

5. Vorrichtung nach einem der Ansprüche 1-4, wobei der zentrale Abschnitt (33; 33') generell länglich, bevorzugt im Wesentlichen gerade, ist und beim in die Nut (7) Drücken gebogen werden kann, wobei die seitlichen Abschnitte (31, 32; 31', 32') dann jeweils in Kontakt mit der Oberfläche an beiden Seiten der Nut (7) kommen.

6. Vorrichtung nach einem der Ansprüche 1-4, wobei der zentrale Abschnitt (33; 33") im Wesentlichen halbrund und elastisch ist, sodass der halbrunde zentrale Abschnitt in die Nut (7) eingefügt werden kann, wo der obere Abschnitt der Nut (7) etwas schmaler als die Breite des zentralen Abschnitts ist, und sich in der Nut (7) wieder ausdehnen kann, sodass die Vorrichtung die Form eines Omega annimmt.

7. Verfahren zum Halten einer Leitung (4) eines in eine Oberfläche integrierten Temperatursteuerungssystems und zur Bildung einer thermischen Verbindung zwischen der Oberfläche und der Leitung, wobei das Verfahren die folgenden Schritte umfasst:
- Anbringen einer Nut (7) in der Oberfläche ;
- Positionieren mindestens einer Haltevorrichtung (3; 3'; 3") mit einer Längsachse in der Nut (7), wobei der Querschnitt der Haltevorrichtung einen zentralen Abschnitt (33; 33'; 33") zur Aufnahme der Leitung (4) in der Nut (7) und an jeder der zwei gegenüberliegenden Seiten des zentralen Abschnitts einen seitlichen Abschnitt (31, 32; 31', 32'; 31", 32") umfasst, wobei jeder der seitlichen Abschnitte (31, 32; 31', 32'; 31", 32") in Bezug auf den zentralen Abschnitt (33; 33'; 33") jeweils flach und um eine Ecke (34, 35; 34', 35'; 34", 35") angewinkelt ist, wobei die seitlichen Abschnitte jeweils in Kontakt mit der Oberfläche an beiden Seiten der Nut (7) kommen, wenn die Haltevorrichtung in der Nut positioniert ist; während die Nut (7) einen sich zu der Oberfläche hin verjüngenden Querschnitt, bevorzugt einen trapezförmigen Querschnitt, aufweist; und die Breite der Nut auf Oberflächenniveau so dimensioniert ist, dass die Breite der Öffnung der Haltevorrichtung (3; 3'; 3") auf Oberflächenniveau etwas weniger als der Außendurchmesser der Leitung (4) beträgt, sodass der Schritt des Positionierens der Leitung das Ausüben eines Drucks auf die Leitung (4) hin zu der Nut (7) erfordert, sodass die Leitung (4) in die mindestens eine Haltevorrichtung (3; 3'; 3") einrastet,
- Positionieren der Leitung (4) in der mindestens einen Haltevorrichtung (3; 3'; 3");
**dadurch gekennzeichnet, dass**
die mindestens eine Haltevorrichtung (3; 3'; 3") elastisch ist und so dimensioniert ist, dass sie durch Verformung in die Nut (4) eingefügt wird und sich nach dem Einfügen wieder in der Nut (7) ausdehnt, um die Form eines Omega anzunehmen;
der Winkel an der Ecke (34, 35; 34', 35'; 34", 35") zwischen jedem der seitlichen Abschnitte (31, 32; 31', 32'; 31", 32") und dem zentralen Abschnitt (33; 33'; 33"), vor dem Einfügen der Vorrichtung in die Nut, gleich oder kleiner 80° ist; und

8. Verfahren nach Anspruch 7, wobei der Schritt des Positionierens der mindestens einen Haltevorrichtung in der Nut umfasst:
- über der Nut Positionieren der mindestens einen Haltevorrichtung (3'), deren zentraler Abschnitt generell länglich, bevorzugt im Wesentlichen gerade, ist und wovon jeder deren seitlicher Abschnitte in Bezug auf den zentralen Abschnitt jeweils um eine Ecke angewinkelt ist, sodass das Ende jedes der seitlichen Abschnitte jeweils in Kontakt mit der Oberfläche an beiden Seiten der Nut ist;
- Ausüben einer Kraft auf den zentralen Abschnitt hin zu der Nut, sodass der zentrale Abschnitt gebogen und in die Nut eingefügt wird und die seitlichen Abschnitte in Kontakt mit der Oberfläche an beiden Rändern der Nut kommen.

9. Verfahren nach Anspruch 8, wobei die Kraft durch einen Finger- oder Fußdruck ausgeübt wird.

10. Verfahren nach Anspruch 7, wobei der Schritt des Positionierens der mindestens einen Haltevorrichtung in der Nut umfasst:
- Positionieren der mindestens einen Haltevorrichtung, deren zentraler Abschnitt (33; 33") halbrund ist, sodass der halbrunde Abschnitt etwas in die Nut eindringt;
- Ausüben einer Kraft auf den zentralen Bereich (33; 33"), bevorzugt auf die Innenseite des halbrunden Abschnitts, hin zu der Nut (7), sodass der zentrale Abschnitt schmaler wird, eindringt und sich dann in der Nut wieder ausdehnt.

11. Verfahren nach Anspruch 7, wobei der Schritt des Anbringens einer Nut (7) in der Oberfläche umfasst:
- auf einem Fußboden Anbringen und Positionieren einer ersten Planke (2) mit einer ersten Oberseite, welche die Oberfläche bildet, und einer ersten Seitenfläche, die in Bezug auf eine zu der ersten Oberseite senkrechten Ebene geneigt ist, wobei die erste Seitenfläche und die erste Oberseite einander an einer ersten Kante schneiden, um einen Winkel von weniger als 90° zu bilden;
- auf dem Fußboden Anbringen einer zweiten Planke (2) mit einer zweiten Oberseite, welche die Oberfläche bildet, und einer zweiten Seitenfläche, die in Bezug auf eine zu der zweiten Oberseite senkrechten Ebene geneigt ist, wobei die zweite Seitenfläche und die zweite Oberseite einander an einer zweiten Kante schneiden, um einen Winkel von weniger als 90° zu bilden,
- Positionieren der zweiten Planke bezüglich der ersten Planke, sodass die erste Kante und die zweite Kante einander gegenüberliegen und parallel sind, um die Nut (7) zu bilden.

12. Verfahren nach Anspruch 11, wobei der Schritt des Positionierens der zweiten Planke (2) bezüglich der ersten Planke (2) mittels eines länglichen Abstandhalters oder mindestens zweier beabstandeter Abstandhalter ausgeführt wird, der bzw. die gegen die erste Kante positioniert wird bzw. werden und wogegen dann die zweite Planke positioniert wird.

13. Verfahren nach Anspruch 11 oder 12, wobei die Planken (2) nach dem Positionieren am Fußboden befestigt werden, bevorzugt durch Schraub-, Klebe- oder Leimmittel.

14. Verfahren nach einem der Ansprüche 7-13, wobei die Haltevorrichtung (3; 3'; 3") so dimensioniert ist, dass die Haltevorrichtung mit der Leitung (4) an mindestens deren halbem Umfang in Kontakt ist.

15. Verfahren nach einem der Ansprüche 7-14, wobei die Haltevorrichtung (3; 3'; 3") und die Nut (7) abhängig von der Größe der Leitung (4) so dimensioniert sind, dass die in der Nut positionierte Leitung vom Grund der Nut beabstandet ist.

## Revendications

1. Dispositif (3; 3'; 3") pour maintenir un tuyau (4) dans une rainure correspondante (7) d'un système de contrôle de température intégré dans une surface, et pour former une liaison thermique entre la surface et le tuyau (4), le dispositif comprenant une feuille de matériau métallique ayant un axe longitudinal, la section transversale du dispositif comprenant une section centrale (33; 33'; 33") destinée à recevoir le tuyau (4) et une section latérale (31, 32; 31', 32'; 31", 32") à chacun de deux côtés opposés de la section centrale (33; 33'; 33"), les sections latérales (31, 32; 31', 32'; 31", 32") étant conçues pour venir en contact avec la surface de chaque côté de la rainure (7), respectivement, lorsque le dispositif maintient le tuyau, chacune des sections latérales (31, 32; 31', 32'; 31", 32") étant plate et inclinée suivant une arête (34, 35; 34', 35'; 34", 35"), respectivement, par rapport à la section centrale (33; 33'; 33"), et dans lequel
la section centrale (33; 33'; 33") est élastique de telle sorte qu'elle peut être insérée par déformation dans la rainure (7) présentant une section transversale diminuant de largeur vers la surface, et se déformer en retour dans la rainure (7) de sorte que le dispositif prend la forme d'un oméga;
**caractérisé en ce que**
l'angle à l'arête (34, 35; 34', 35'; 34", 35") entre chacune des sections latérales (31, 32; 31', 32'; 31 ", 32") et la section centrale (33; 33'; 33"), avant l'insertion du dispositif dans la rainure, est inférieur ou égal à 80°.

2. Dispositif selon la revendication 1, dans lequel le rayon de courbure de l'arête est suffisamment petit que pour empêcher tout mouvement de glissement des sections latérales lorsque le dispositif de maintien est en place et maintient le tuyau, ledit rayon étant de préférence égal ou inférieur à 1 mm.

3. Dispositif selon la revendication 2, dans lequel la feuille de matériau métallique consiste en une bande unique de matériau métallique et chacune des sections latérales (31, 32; 31', 32'; 31", 32") est réalisée par pliage d'une partie d'extrémité de la bande.

4. Dispositif selon l'une des revendications 2 ou 3, dans lequel l'angle à l'arête (34, 35; 34', 35'; 34", 35") entre chacune des sections latérales (31, 32; 31', 32'; 31", 32") et la section centrale (33; 33'; 33 ") est inférieur à environ 75°.

5. Dispositif selon l'une quelconque des revendications 1 à 4, dans lequel la section centrale (33; 33') est généralement allongée, de préférence sensiblement rectiligne, et apte à être pliée lorsqu'elle est poussée dans la rainure (7), les sections latérales (31, 32; 31', 32') venant alors en contact avec la surface de chaque côté, respectivement, de la rainure (7).

6. Dispositif selon l'une quelconque des revendications 1 à 4, dans lequel la section centrale (33; 33") est essentiellement demi-arrondie et élastique de telle sorte que la section centrale demi-arrondie peut être insérée dans la rainure (7), où la portion supérieure de la rainure (7) est légèrement plus étroite que la largeur de la section centrale, et peut se déformer en retour dans la rainure (7) de sorte que le dispositif prenne la forme d'un oméga.

7. Procédé pour maintenir un tuyau (4) d'un système de contrôle de température intégré dans une surface, et pour former une liaison thermique entre la surface et le tuyau, le procédé comprenant les étapes suivantes:
- fournir une rainure (7) dans la surface;
- positionner au moins un dispositif de maintien (3; 3'; 3") avec un axe longitudinal dans la rainure (7), la section transversale du dispositif de maintien comprenant une section centrale (33; 33'; 33") destinée à recevoir le tuyau (4) dans la rainure (7) et une section latérale (31, 32; 31', 32'; 31", 32") à chacun des deux côtés opposés de la section centrale, chacune des sections latérales (31, 32; 31', 32'; 31", 32") étant plate et inclinée suivant une arête (34, 35; 34', 35'; 34", 35"), respectivement, par rapport à la partie centrale (33; 33'; 33"), les parties latérales venant en contact avec la surface de chaque côté de la rainure (7), respectivement, lorsque le dispositif de maintien est positionné dans la rainure;
- positionner le tuyau (4) dans le ou les dispositifs de maintien (3; 3'; 3"); et où la rainure (7) présente une section transversale dont la largeur diminue vers la surface, de préférence une section transversale de forme trapézoïdale; et
la largeur de la rainure au niveau de la surface est dimensionnée de telle sorte que la largeur de l'ouverture du dispositif de maintien (3; 3'; 3") au niveau de la surface est légèrement inférieure au diamètre extérieur du tuyau (4) de telle sorte que l'étape de positionnement du tuyau nécessite d'exercer une pression sur le tuyau (4) en direction de la rainure (7) de sorte que le tuyau (4) se clippe dans le ou au moins un des dispositifs de maintien (3; 3'; 3").
**caractérisé en ce que**
le ou les dispositifs de maintien (3; 3'; 3") sont élastiques et dimensionnés de telle sorte qu'ils sont insérés dans la rainure (7) par déformation et se déforment en retour dans la rainure (7) après l'insertion pour prendre la forme d'un oméga; et
l'angle à l'arête (34, 35; 34', 35'; 34", 35") entre chacune des portions latérales (31, 32; 31', 32'; 31", 32") et la section centrale (33; 33 '; 33 "), avant l'insertion du ou des dispositifs dans la rainure, est égal ou inférieur à 80°.

8. Procédé selon la revendication 7, dans lequel l'étape de positionnement du dispositif de maintien dans la rainure comprend:
- positionner le ou les dispositifs de maintien (3'), dont la section centrale est généralement de forme allongée, de préférence sensiblement rectiligne, et dont chacune des sections latérales est inclinée suivant une arête, respectivement, par rapport à la section centrale, sur la rainure de telle sorte que l'extrémité de chacune des sections latérales soit en contact avec la surface de chaque côté de la rainure, respectivement;
- exercer une force sur la partie centrale en direction de la rainure de telle sorte que la partie centrale se plie et s'insère dans la rainure et les portions latérales entrent en contact avec la surface à chaque côté de la rainure.

9. Procédé selon la revendication 8, dans lequel la force est exercée par un doigt ou une pression du pied.

10. Procédé selon la revendication 7, dans lequel l'étape de positionnement du dispositif de maintien dans la rainure comprend:
- positionner le ou les dispositifs de maintien, dont la section centrale (33; 33") est en forme de demi-rond, au-dessus de la rainure (7) de telle sorte que la section en demi-rond pénètre légèrement la rainure;
- exercer une force sur la portion centrale (33; 33"), de préférence à l'intérieur de la section en demi-rond, en direction de la rainure (7) de telle sorte que la section centrale se rétrécisse, pénètre ensuite se déforme en retour dans la rainure.

11. Procédé selon la revendication 7, dans lequel l'étape de fourniture d'une rainure (7) dans la surface comprend:
- fournir et positionner sur un plancher une première planche (2) avec une première face supérieure formant la surface et une première face latérale inclinée par rapport à un plan perpendiculaire à la première face supérieure, la première face latérale et la première face supérieure se croisant à un premier bord pour former un angle inférieur à 90°;
- fournir sur le plancher une seconde planche (2) avec une seconde face supérieure formant la surface et une seconde face latérale inclinée par rapport à un plan perpendiculaire à la deuxième face supérieure, la seconde face latérale et la seconde face supérieure se croisant à une seconde bord pour former un angle inférieur à 90°,
- positionner la seconde planche par rapport à la première lame de telle sorte que le premier bord et le second bord se font face et sont parallèles pour former la rainure (7).

12. Procédé selon la revendication 11, dans lequel l'étape de positionnement de la deuxième planche (2) par rapport à la première planche (2) est réalisée au moyen d'une entretoise allongée, ou au moins deux entretoises disposées à distance l'une de l'autre, contre le premier bord et contre laquelle/lesquelles la deuxième planche est alors positionnée.

13. Procédé selon la revendication 11 ou 12, dans laquelle les planches (2) sont fixés sur le plancher, de préférence par mes moyens de vissage, collage ou clouage, après avoir été positionnées.

14. Procédé selon l'une des revendications 7 à 13, dans lequel le dispositif de maintien (3; 3'; 3") et la rainure sont dimensionnés de telle sorte le dispositif de maintien contacte le tuyau (4) sur au moins la moitié de sa périphérie.

15. Procédé selon l'une des revendications 7 à 14, dans lequel le dispositif de maintien (3; 3'; 3") et la rainure (7) sont dimensionnés en fonction de la taille du tuyau (4) de telle sorte que le tuyau positionné dans rainure est distant de la base de la rainure.
